# EUROPEAN PATENT SPECIFICATION

(11) **EP 3 511 194 B1**
(45) Date of publication and mention of the grant of the patent: **23.12.2020**
(21) Application number: 18151951.3
(22) Date of filing: 16.01.2018
(51) Int. Cl.: B60L 53/12, B60L 53/36, B60L 53/38

(54) **A DRIVING ASSIST SYSTEM AND A METHOD FOR POSITIONING A VEHICLE OVER A CHARGING STATION**
FAHRASSISTENZSYSTEM UND VERFAHREN ZUR POSITIONIERUNG EINES FAHRZEUGS ÜBER EINE LADESTATION
SYSTÈME D'ASSISTANCE À LA CONDUITE ET PROCÉDÉ DE POSITIONNEMENT D'UN VÉHICULE SUR UNE STATION DE CHARGEMENT

(43) Date of publication of application: 17.07.2019
(73) Proprietor: Bayerische Motoren Werke Aktiengesellschaft, 80809 München (DE)
(72) Inventor: LUND, Isaac, Salinas, CA 93907 (US); VIALA, Pascal, Mountain View, 94043 (US)

(56) References cited:
- EP-A2- 2 905 170
- GB-A- 2 515 876
- US-A1- 2012 203 410
- US-A1- 2015 151 641
- US-A1- 2017 259 679

## Description

The invention concerns a driving assist system and a method for positioning a vehicle over a charging station.

The current state of the art for wireless charging parking assistant is to use a GPS (global positioning system) geolocation for long range assistant and to use bluetooth, WLAN (wireless local area network), ZigBee or other suitable wireless geolocation assistants for short range assistant. For efficient wireless transfer the receiver coil on the car has to be overlaid on the transmission coil on the ground or imbedded in the concrete with an offset allowed of up to 10 cm in the X and Y directions. There is no standard solution for the short range assistant with companies using bluetooth, WLAN or ZigBee and interfacing with the driver through an application on the mobile phone, a wall monitor or the vehicle's head unit.

The current disadvantage to the state of the art is that there is no standardization so there is no interoperability between systems. The other disadvantage of the state of the art is the assumption that the optimum power transfer location will always be in the center of the ground pad, thus providing geolocation of the receiver coil to be centered over that spot, when in reality the optimum point could be away from the center point in the ground pad, and could also change due to aging in the coils and environmental conditions such as rain, snow, freeze, etc.

Conventional wireless charging systems for vehicles are described in documents US 2016 /0 137 073 A1 and US 2017 / 0 036 553 A1.

US 2017/259679 A1 discloses methods and apparatus for positioning a vehicle is provided. The apparatus comprises a plurality of receive, each configured to generate a respective voltage signal from a wireless magnetic field generated by a field generator.

GB 2515876 A recites a method for assisting with the positioning of an electric vehicle (EV) for inductive charging in which instructions or guidance are/is provided to the driver or the vehicle for aligning the secondary coil with the primary coil, increasing power transfer efficiency . US 2012/203410 A1 recites that a method of automatic self-regulating iteration turns the probing approach to positioning an electric vehicle at a charging station with maximum coil congruence into a process barely perceptible to the driver that is finished within a few seconds. The use of satellite position sensors is also mentioned. EP 2 905 170 A2 relates a system for charging an electric vehicle wherein a vehicle carries out positioning through automatic or manual movement of vehicle and whereby satellite guidance may be used. US 2015/151641 A1 relates a system for carrying out a driving maneuver, in which the driver is assisted by way of a human-machine interface by emitted instructions or the trajectory is used as an input variable for a drive assistance system which automatically moves the vehicle into the charging position.

It is an underlying object of the invention to provide a driving assist system that allows positioning a vehicle over a charging station from a short distance such that an optimum power transfer from the transmission coil to the receiver coil can be achieved. It is further an object of the invention to provide a vehicle that comprises the driving assist system and a method for positioning a vehicle over a charging station.

The object underlying the invention is satisfied by the features of the independent claims. Advantageous further developments and aspects of the invention are set forth in the dependent claims.

In a first aspect of the application a driving assist system for positioning or parking a vehicle over a charging station is provided. The charging station is configured to generate an electromagnetic field for wirelessly transmitting electrical energy to the vehicle.

The driving assist system comprises an LC circuit with a receiver coil and a variable capacitor, a determination unit, a control unit and a guidance unit. The receiver coil of the LC circuit is configured to convert the electromagnetic field generated by the charging station into an electrical signal, which is, in particular, an analog electrical signal. The electrical signal can be used for charging an energy storage unit, for example a battery, in the vehicle. The variable capacitor is configured to match the LC circuit, in particular impedance and frequency of the LC circuit. The determination unit is configured to determine the capacitor value of the variable capacitor after the variable capacitor has been set to match the LC circuit. The control unit is configured to receive the determined capacitor value from the determination unit and to generate a first control signal that depends on a comparison of a predetermined capacitor value and the determined capacitor value. In particular, the generation of the first control signal depends on a deviation of the determined capacitor value from the predetermined capacitor value or a difference between the predetermined capacitor value and the determined capacitor value. The guidance unit is configured to receive the first control signal from the control unit and to use the first control signal to guide the vehicle or a driver of the vehicle for positioning the vehicle over the charging station.

The driving assist system according to the first aspect of the application overcomes the disadvantages mentioned above as the driving assist system does not require a short range geolocation assistant. The driving assist system works by optimizing the impedance as determined by the variable capacitor to determine the optimum position for power transfer by referencing the determined capacitor value against the predetermined capacitor value, which can be an ideal capacitor value. This may simply be done through logging the variable capacitor value versus the location of the vehicle and then optimizing the location versus the difference between the predetermined capacitor value and the determined capacitor value.

The driving assist system according to the first aspect of the application allows interoperability with multiple different wireless charging stations without having to have all the different short range geolocation services. It allows to be at the correct optimal point for the actual highest efficiency power transfer, instead of just at the supposed optimal location, i.e. the center.

The predetermined capacitor value may be the ideal setting of the variable capacitor for both optimized power transfer of, for example, 3.04 or 6.74 kW (95% efficiency of 3.2 and 7.1 kW wireless power transfer) and frequency at a given value, for example 85 kHz. This value may be predetermined in a factory setting and tested after installation in a testing rig. The optimum factory set variable capacitor, i.e., the predetermined capacitor value, is utilized in a real world situation as the best case and the steering angle and the vehicle velocity are modified in order to optimize the position of the vehicle through a linear regression analysis.

The LC circuit is also called resonant circuit, tank circuit or tuned circuit and can also be an RLC circuit containing at least one resistor.

The capacitor value determined by the determination unit is a value that is characteristic of the capacitor value of the variable capacitor. However, the capacitor value determined by the determination does not need to have physical units, but can have any units.

In order to match the LC circuit, the capacitor value of the variable capacitor can be set by a matching unit. The matching unit is a further control unit that determines the capacitor value of the variable capacitor against the coupling factor, i.e., the absorbed power over the transmitted power, and then optimizes the capacitor value of the variable capacitor to minimize the absorbed power to the transmitted power.

The determination unit can, for example, measure the capacitor value of the variable capacitor or read out the capacitor value from any other unit, for example from the matching unit.

Depending on the distance between the transmission coil of the charging station and the receiver coil, only a fraction of the electromagnetic flux generated by the transmission coil penetrates the receiver coil and contributes to the energy transmission. The more flux reaches the receiver coil, the better the transmission coil and the receiver coil are coupled. The grade of coupling can be expressed by the coupling factor. The coupling factor is a dimensionless value between 0 and 1. 1 expresses perfect coupling between the transmission coil and the receiver coil, i.e., all flux generated penetrates the receiver coil. The coupling factor is 0 in a situation where the transmission coil and the receiver coil are independent of each other.

It may be provided that the control unit is configured to generate the first control signal such that the vehicle or the driver is guided by the guidance unit for maneuvering the vehicle in such a direction that the coupling between a transmission coil of the charging station and the receiver coil and thus the coupling factor is increased. In other words, the steering angle and, in particular, the velocity of the vehicle are modified such that the deviation of the capacitor value of the variable capacitor from the predetermined capacitor value is reduced when the capacitor value of the variable capacitor is determined the next time. This allows to find the optimal position of the vehicle over the charging station.

In one embodiment, the driving assist system is configured to position the vehicle over the charging station in consecutive iteration cycles. In each iteration cycle the capacitor value of the variable capacitor is set to match the LC circuit. Further, the determination unit determines the capacitor value, and the control unit receives the determined capacitor value from the determination unit and generates the first control signal that depends on the comparison of the predetermined capacitor value and the actual determined capacitor value. The guidance unit receives the first control signal generated by the control unit and uses the first control signal to guide the vehicle or the driver for maneuvering the vehicle. Further, in each iteration cycle the control unit generates the first control signal such that the coupling between the transmission coil of the charging station and the receiver coil is increased and thus the deviation or difference between the predetermined capacitor value and the capacitor value determined in the next iteration cycle is reduced.

The control unit may terminate the iteration when the deviation of the determined capacitor value from the predetermined capacitor value is within a predetermined range around the predetermined capacitor value, for example, within +/- 5% of the predetermined capacitor value. When the determined capacitor value is within the predetermined range, it is assumed that the optimal position of the receiver coil over the charging station has been found.

It may be provided that the control unit generates the first control signal only if the distance between a transmission coil of the charging station and the receiver coil is lower than a predetermined distance, for example, lower than 10 meter.

The driving assist system may comprise a geolocation unit for long range assistant. The geolocation unit is configured to estimate the location of the vehicle and to generate a second control signal that depends on the location of the vehicle and the location of the charging station. The guidance unit uses the second control signal to guide the vehicle or the driver of the vehicle for positioning the vehicle over the charging station if the distance between the transmission coil of the charging station and the receiver coil is greater than or equal to the predetermined distance.

The guidance unit may be further configured to automatically, in particular autonomously, maneuver the vehicle for positioning the vehicle over the charging station by means of the first control signal. In this case, the steering angle and the velocity of the vehicle are automatically modified during the parking maneuver.

If the vehicle is manually driven, the guidance unit may comprise an indication unit. The indication unit generates optical, audible, haptic or other suitable indications that indicate to the driver how to maneuver the vehicle over the charging station. For example, the indication unit may indicate the steering angle to the driver in order to move the vehicle in the direction of the charging station.

According to a second aspect of the application, a vehicle comprises a driving assist system as described above.

According to a third aspect of the application, a method for positioning a vehicle over a charging station comprises the following steps: generating an electromagnetic field by the charging station for wirelessly transmitting electrical energy to the vehicle; converting the electromagnetic field into an electrical signal by means of a receiver coil of an LC circuit in the vehicle and matching the LC circuit, in particular impedance and frequency of the LC circuit, by means of a variable capacitor of the LC circuit; determining the capacitor value of the variable capacitor after matching the LC circuit; generating a first control signal that depends on a comparison of the determined capacitor value and a predetermined capacitor value; and guiding the vehicle or a driver of the vehicle for positioning the vehicle over the charging station by means of the first control signal.

The method may comprise the embodiments disclosed above in connection with the driving assist system according to the first aspect of the application.

It should be observed that the methods, devices and systems described in the present document can be applied both in isolation and in combination with other methods, devices and systems described in the present document. Moreover, any aspects of the methods, devices and systems described in the present document can be mutually combined in a variety of ways.

The invention will be described in more detail in the following in an exemplary manner with reference to an embodiment and to the drawings. There are shown in these:
- Fig. 1: a schematic representation of an exemplary embodiment of a driving assist system according to the first aspect of the application and a vehicle according to the second aspect of the application;
- Fig. 2: a circuit diagram of an exemplary embodiment of a charging station and an LC circuit in the vehicle;
- Fig. 3: a schematic representation of an exemplary embodiment of a method according to the third aspect of the application; and
- Fig. 4: a schematic representation of the coupling factor in a xy-plane.

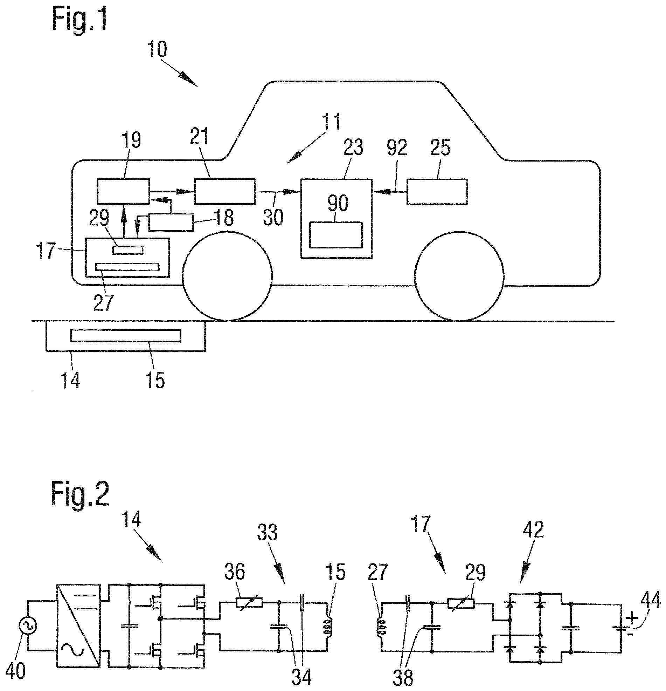

In Fig. 1 an exemplary embodiment of a vehicle 10, in particular a car, and an exemplary embodiment of a driving assist system 11 installed in the vehicle 10 according to the first and second aspects of the application are illustrated.

The driving assist system 11 allows positioning/parking the vehicle 10 over a charging station 14. The charging station 14 is, for example, embedded in the floor of a parking area and includes a transmission coil 15. The transmission coil 15 generates an electromagnetic field for wirelessly transmitting electrical energy to the vehicle 10.

The driving assist system 11 includes an LC circuit 17, a matching unit 18, a determination unit 19, a control unit 21, a guidance unit 23 and a geolocation unit 25.

The LC circuit 17 includes a receiver coil 27 that converts the electromagnetic field generated by the transmission coil 15 into an analog electrical signal. The LC circuit 17 further includes a variable capacitor 29 that is configured to match impedance and frequency of the LC circuit 17.

Fig. 2 shows a circuit diagram of the charging station 14 and the LC circuit 17 in the vehicle 10.

The charging station 14 includes an LC circuit 33 consisting of the transmission coil 15, one or more capacitors 34 with fixed capacitor values and a variable capacitor 36 which is configured to match impedance and frequency of the LC circuit 33.

The LC circuit 17 in the vehicle 10 consists of the receiver coil 27, one or more capacitors 38 with fixed capacitor values and the variable capacitor 29 which is configured to match impedance and frequency of the LC circuit 17. The variable capacitor 29 can be arranged in series or parallel to the receiver coil 27.

In the charging station 14, a radio-frequency generator 40 generates an alternating current in the transmission coil 15, as a result of which the electromagnetic field is induced. Given sufficient electromagnetic coupling between the transmission coil 15 and the receiver coil 27, the electromagnetic field induces a corresponding voltage and therefore also a current in the receiver coil 27. The induced current in the receiver coil 27 is rectified by a rectifier 42 and charges a battery 44. It is therefore possible to wirelessly transmit energy by means of the electromagnetic charging field from the charging station 14 to the battery 44 or any other energy storage unit in the vehicle 10. For an effective transfer of energy it is necessary for the receiver coil 27 to be positioned relatively precisely over the transmission coil 15.

The matching unit 18 determines the capacitor value of the variable capacitor 29 against the coupling factor, which is the absorbed power over the transmitted power, and then optimizes the capacitor value of the variable capacitor 29 to minimize the absorbed power to the transmitted power.

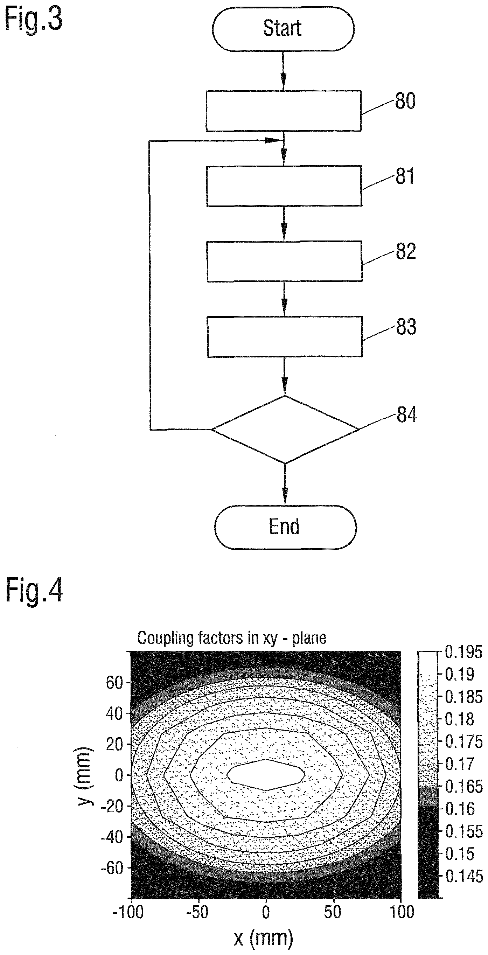

Fig. 3 illustrates an exemplary embodiment of a method for positioning the vehicle 10 over the charging station 14 according to the third aspect of the application. The method can be performed by the driving assist system 11 shown in Fig. 1.

The method starts when the distance between the transmission coil 15 of the charging station 14 and the receiver coil 27 in the vehicle 10 is lower than a predetermined distance, for example, lower than 10 meter.

The driving assist system 11 positions the vehicle 10 over the charging station 14 in consecutive iteration cycles.

In step 80, the determination unit 19 determines the capacitor value of the variable capacitor 29, wherein the matching unit 18 has set the capacitor value of the variable capacitor 29 in order to minimize the absorbed power to the transmitted power. It can be provided that the determination unit 19 does not directly measure or determine the capacitor value, but the matching unit 18 informs the determination unit 19 about the capacitor value.

In step 81, the control unit 21 receives the determined capacitor value from the determination unit 19 and generates a first control signal 30. The first control signal 30 depends on the deviation of the determined capacitor value from the predetermined capacitor value, in particular the difference between the predetermined capacitor value and the determined capacitor value. The control unit 21 generates the first control signal 30 such that the vehicle 10 is guided in such a direction that the coupling between the transmission coil 15 and the receiver coil 27 and thus the coupling factor are increased. In other words, the steering angle and, in particular, the velocity of the vehicle 10 are modified such that the difference between the predetermined capacitor value and the capacitor value that is determined in the next iteration cycle is reduced.

In step 82, the guidance unit 23 receives the first control signal 30 from the control unit 21 and uses the first control signal 30 to guide the vehicle 10 or a driver of the vehicle 10 to maneuver the vehicle such that the receiver coil 27 approaches the transmission coil 15.

In step 83, the matching unit 18 sets the capacitor value of the variable capacitor 29 such that the absorbed power is minimized to the transmitted power. The determination unit 19 again determines the capacitor value of the variable capacitor 29 and the difference between the predetermined capacitor value and the determined capacitor value is determined by the control unit 21.

In step 84, the control unit 21 checks whether the difference between the predetermined capacitor value and the capacitor value determined in step 83 is within a predetermined range. If the difference is not within the predetermined range, the method returns to step 81 and the next iteration cycle starts.

If the difference between the predetermined capacitor value and the determined capacitor value is within the predetermined range in step 84, the control unit 21 terminates the method and the vehicle 10 has reached its final parking position over the charging station 14.

The coupling factor, which can also be inferred through the position of the variable capacitor 29, is a spherical topological map around the optimum position in a xy-plane as exemplarily illustrated in Fig. 4. During the iteration as described above, the steering angle and, in particular, the velocity of the vehicle 10 are optimized in order to increase the coupling factor and head up the topological map that would provide a better coupling factor.

The guidance unit 23 can be configured to automatically maneuver the vehicle 10 for positioning the vehicle 10 over the charging station 14 by means of the first control signal 30, i.e., the vehicle 10 is automatically steered and, in particular, the brake and the driving speed of the vehicle 10 are controlled by the guidance unit 23.

Alternatively, the guidance unit 23 comprises an indication unit 90 which may be a screen, a loudspeaker or any other suitable device and which generates indications to indicate to the driver how to maneuver the vehicle 10 over the charging station 14.

In addition, the driving assist system 11 includes a geolocation unit 25 which can be, for example, a GPS geolocation unit. The geolocation unit 25 helps to move the vehicle 10 in the direction of the charging station 14 when the vehicle is far away from the charging station 14. The geolocation unit 25 estimates the location of the vehicle 10 and generates a second control signal 92 that depends on the location of the vehicle 10 and the location of the charging station 14. The guidance unit 23 receives the second control signal 92 and uses the second control signal 92 to guide the vehicle 10 to the charging station 14.

## Claims

1. A driving assist system (11) for positioning a vehicle (10) over a charging station (14), which has a transmission coil (15) and is configured to generate an electromagnetic field for wirelessly transmitting electrical energy to the vehicle (10), comprising:
- an LC circuit (17) comprising a receiver coil (27) which is configured to convert the electromagnetic field into an electrical signal and a variable capacitor (29) which is configured to match the LC circuit (1) to the transmission coil (15), and
- a guidance unit (23) which is configured to guide the vehicle (10) or a driver of the vehicle (10) for positioning the vehicle (10) over the charging station (14),
**characterized in that**
- the driving assist system (11) further comprises:
- a determination unit (19) which is configured to determine the capacitor value of the variable capacitor (29) after matching the LC circuit;
- a control unit (21) which is configured to receive the determined capacitor value from the determination unit (19) and to generate a first control signal (30), which depends on a comparison of a predetermined capacitor value and the determined capacitor value, such that the vehicle (10) or the driver is guided by the guidance unit (23) for maneuvering the vehicle (10) in such a direction that the coupling between the transmission coil (15) of the charging station (14) and the receiver coil (27) is increased; and
- the guidance unit (23) is configured to receive the first control signal (30) from the control unit (21) and to guide the vehicle (10) or a driver of the vehicle (10) for positioning the vehicle (10) over the charging station (14) by means of the first control signal (30).

2. The driving assist system (11) as claimed in claim 1, wherein
- the driving assist system (11) is configured to position the vehicle (10) over the charging station (14) in consecutive iteration cycles,
- in each iteration cycle the control unit (21) receives the determined capacitor value from the determination unit (19) and generates the first control signal (30), and the guidance unit (23) receives the first control signal (30) from the control unit (21) and guides the vehicle (10) or the driver for maneuvering the vehicle (10) by means of the first control signal (30), and
- in each iteration cycle the control unit (21) generates the first control signal (30) such that the coupling between the transmission coil (15) of the charging station (14) and the receiver coil (27) is increased.

3. The driving assist system (11) as claimed in claim 2, wherein the control unit (21) is further configured to terminate the iteration when a deviation of the determined capacitor value from the predetermined capacitor value is within a predetermined range.

4. The driving assist system (11) as claimed in one of the preceding claims, wherein the control unit (21) is further configured to generate the first control signal (30) only if the distance between the transmission coil (15) of the charging station (14) and the receiver coil (27) is lower than a predetermined distance.

5. The driving assist system (11) as claimed in claim 4, further comprising a geolocation unit (25) which is configured to estimate the location of the vehicle (10) and to generate a second control signal (92) that depends on the location of the vehicle (10) and the location of the charging station (14), wherein the guidance unit (23) is further configured to guide the vehicle (10) or the driver of the vehicle (10) for positioning the vehicle (10) over the charging station (14) by means of the second control signal (92) if the distance between the transmission coil (15) of the charging station (14) and the receiver coil (27) is greater than or equal to the predetermined distance.

6. The driving assist system (11) as claimed in one of the preceding claims, wherein the guidance unit (23) is further configured to automatically maneuver the vehicle (10) for positioning the vehicle (10) over the charging station (14) by means of the first control signal (30).

7. The driving assist system (11) as claimed in one of the claims 1 to 5, wherein the guidance unit (23) comprises an indication unit (90) which is configured to generate indications to indicate to the driver how to maneuver the vehicle (10) over the charging station (14).

8. Vehicle (10) comprising a driving assist system (11) as claimed in one of the preceding claims.

9. A method for positioning a vehicle (10) over a charging station (14) having a transmission coil (15), comprising:
- generating an electromagnetic field by the charging station (14) for wirelessly transmitting electrical energy to the vehicle (10);
- converting the electromagnetic field into an electrical signal by means of a receiver coil (27) of an LC circuit (17) in the vehicle (10) and matching the LC circuit (17) by means of a variable capacitor (29) of the LC circuit (1) to the transmission coil (15)
- determining the capacitor value of the variable capacitor (29) after matching the LC circuit;
- generating a first control signal (30) that depends on a comparison of a predetermined capacitor value and the determined capacitor value, the first control signal (30) being generated such that the vehicle (10) or the driver is guided for maneuvering the vehicle (10) in such a direction that the coupling between the transmission coil (15) of the charging station (14) and the receiver coil (27) is increased; and
- guiding the vehicle (10) or a driver of the vehicle (10) for positioning the vehicle (10) over the charging station (14) by means of the first control signal (30).

10. The method as claimed in claim 9, wherein
- the vehicle (10) is positioned over the charging station (14) in consecutive iteration cycles,
- in each iteration cycle the capacitor value of the variable capacitor (29) is determined, the first control signal (30) is generated, and the vehicle (10) or the driver is guided for maneuvering the vehicle (10) by means of the first control signal (30), and
- in each iteration cycle the first control signal (30) is generated such that the coupling between the transmission coil (15) of the charging station (14) and the receiver coil (27) is increased.

11. The method as claimed in claim 10, wherein the iteration is terminated when a deviation of the determined capacitor value from the predetermined capacitor value is within a predetermined range.

12. The method as claimed in one of the claims 9 to 11, wherein the first control signal (30) is generated only if the distance between the transmission coil (15) of the charging station (14) and the receiver coil (27) is lower than a predetermined distance.

13. The method as claimed in claim 12, wherein a geolocation unit (25) estimates the location of the vehicle (10) and generates a second control signal (92) that depends on the location of the vehicle (10) and the location of the charging station (14), wherein the vehicle (10) or the driver of the vehicle (10) is guided for positioning the vehicle (10) over the charging station (14) by means of the second control signal (92) if the distance between the transmission coil (15) of the charging station (14) and the receiver coil (27) is greater than or equal to the predetermined distance.

## Patentansprüche

1. Fahrassistenzsystem (11) zum Positionieren eines Fahrzeugs (10) über eine Ladestation (14), das eine Übertragungsspule (15) aufweist und dazu ausgelegt ist, ein elektromagnetisches Feld zur drahtlosen Übertragung von elektrischer Energie an das Fahrzeug (10) zu erzeugen, umfassend:
- eine LC-Schaltung (17), die eine Empfängerspule (27) umfasst, die dazu ausgelegt ist, das elektromagnetische Feld in ein elektrisches Signal umzuwandeln, und einen variablen Kondensator (29), der dazu ausgelegt ist, die LC-Schaltung (17) an die Übertragungsspule (15) anzupassen,
- eine Führungseinheit (23), die dazu ausgelegt ist, das Fahrzeug (10) oder einen Fahrer des Fahrzeugs (10) zum Positionieren des Fahrzeugs (10) über die Ladestation (14) zu führen,
**dadurch gekennzeichnet, dass**
- das Fahrassistenzsystem (11) ferner umfasst:
- eine Bestimmungseinheit (19), die dazu ausgelegt ist, nach dem Anpassen der LC-Schaltung den Kondensatorwert des variablen Kondensators (29) zu bestimmen;
- eine Steuereinheit (21), die dazu ausgelegt ist, den bestimmten Kondensatorwert aus der Bestimmungseinheit (19) zu empfangen und ein erstes Steuersignal (30) zu erzeugen, das von einem Vergleich eines vorbestimmten Kondensatorwertes und des bestimmten Kondensatorwertes abhängt, sodass das Fahrzeug (10) oder der Fahrer durch die Führungseinheit (23) geführt wird, um das Fahrzeug (10) so in eine Richtung zu manövrieren, dass die Kopplung zwischen der Übertragungsspule (15) der Ladestation (14) und der Empfängerspule (27) erhöht wird; und
- die Führungseinheit (23) dazu ausgelegt ist, das erste Steuersignal (30) aus der Steuereinheit (21) zu empfangen und das Fahrzeug (10) oder einen Fahrer des Fahrzeugs (10) mittels des ersten Steuersignals (30) zum Positionieren des Fahrzeugs (10) über die Ladestation (14) zu führen.

2. Fahrassistenzsystem (11) gemäß Anspruch 1, wobei
- das Fahrassistenzsystem (11) dazu ausgelegt ist, das Fahrzeug (10) in aufeinanderfolgenden Iterationszyklen über die Ladestation (14) zu positionieren,
- die Steuereinheit (21) in jedem Iterationszyklus den bestimmten Kondensatorwert aus der Bestimmungseinheit (19) empfängt und das erste Steuersignal (30) erzeugt, und die Führungseinheit (23) das erste Steuersignal (30) aus der Steuereinheit (21) empfängt und das Fahrzeug (10) oder den Fahrer mittels des ersten Steuersignals (30) zum Manövrieren des Fahrzeugs (10) führt, und
- die Steuereinheit (21) in jedem Iterationszyklus das erste Steuersignal (30) erzeugt, sodass die Kopplung zwischen der Übertragungsspule (15) der Ladestation (14) und der Empfängerspule (27) erhöht wird.

3. Fahrassistenzsystem (11) gemäß Anspruch 2, wobei die Steuereinheit (21) ferner dazu ausgelegt ist, die Iteration zu beenden, wenn eine Abweichung des bestimmten Kondensatorwertes von dem vorbestimmten Kondensatorwert innerhalb eines vorbestimmten Bereichs liegt.

4. Fahrassistenzsystem (11) gemäß einem der vorhergehenden Ansprüche, wobei die Steuereinheit (21) ferner dazu ausgelegt ist, das erste Steuersignal (30) nur zu erzeugen, wenn die Entfernung zwischen der Übertragungsspule (15) der Ladestation (14) und der Empfängerspule (27) geringer als eine vorbestimmte Entfernung ist.

5. Fahrassistenzsystem (11) gemäß Anspruch 4, ferner umfassend eine Geolokalisierungseinheit (25), die dazu ausgelegt ist, den Standort des Fahrzeugs (10) zu schätzen und ein zweites Steuersignal (92) zu erzeugen, das von dem Standort des Fahrzeugs (10) und dem Standort der Ladestation (14) abhängt, wobei die Führungseinheit (23) ferner dazu ausgelegt ist, das Fahrzeug (10) oder den Fahrer des Fahrzeugs (10) mittels des zweiten Steuersignals (92) zum Positionieren des Fahrzeugs (10) über die Ladestation (14) zu führen, wenn die Entfernung zwischen der Übertragungsspule (15) der Ladestation (14) und der Empfängerspule (27) größer oder gleich der vorbestimmten Entfernung ist.

6. Fahrassistenzsystem (11) gemäß einem der vorhergehenden Ansprüche, wobei die Führungseinheit (23) ferner dazu ausgelegt ist, das Fahrzeug (10) automatisch zu manövrieren, um das Fahrzeug (10) mittels des ersten Steuersignals (30) über die Ladestation (14) zu positionieren.

7. Fahrassistenzsystem (11) gemäß einem der Ansprüche 1 bis 5, wobei die Führungseinheit (23) eine Anzeigeeinheit (90) umfasst, die dazu ausgelegt ist, Anzeigen zu erzeugen, um dem Fahrer anzuzeigen, wie das Fahrzeug (10) über die Ladestation (14) zu manövrieren ist.

8. Fahrzeug (10), umfassend ein Fahrassistenzsystem (11) gemäß einem der vorhergehenden Ansprüche.

9. Verfahren zum Positionieren eines Fahrzeugs (10) über eine Ladestation (14) mit einer Übertragungsspule (15), umfassend:
- Erzeugen eines elektromagnetischen Feldes durch die Ladestation (14) zum drahtlosen Übertragen elektrischer Energie an das Fahrzeug (10);
- Umwandeln des elektromagnetischen Feldes in ein elektrisches Signal mittels einer Empfängerspule (27) einer LC-Schaltung (17) im Fahrzeug (10) und Anpassen der LC-Schaltung (17) mittels eines variablen Kondensators (29) der LC-Schaltung (17) an die Übertragungsspule (15);
- Bestimmen des Kondensatorwertes des variablen Kondensators (29) nach dem Anpassen der LC-Schaltung;
- Erzeugen eines ersten Steuersignals (30), das von einem Vergleich eines vorbestimmten Kondensatorwertes und des bestimmten Kondensatorwertes abhängt, wobei das erste Steuersignal (30) so erzeugt wird, dass das Fahrzeug (10) oder der Fahrer zum Manövrieren des Fahrzeugs (10) so in einer Richtung geführt wird, dass die Kopplung zwischen der Übertragungsspule (15) der Ladestation (14) und der Empfängerspule (27) erhöht wird; und
- Führen des Fahrzeugs (10) oder eines Fahrers des Fahrzeugs (10) zum Positionieren des Fahrzeugs (10) mittels des ersten Steuersignals (30) über die Ladestation (14).

10. Verfahren gemäß Anspruch 9, wobei
- das Fahrzeug (10) in aufeinanderfolgenden Iterationszyklen über die Ladestation (14) positioniert wird,
- in jedem Iterationszyklus der Kondensatorwert des variablen Kondensators (29) bestimmt wird, das erste Steuersignal (30) erzeugt wird und das Fahrzeug (10) oder der Fahrer mittels des ersten Steuersignals (30) zum Manövrieren des Fahrzeugs (10) geführt wird, und
- in jedem Iterationszyklus das erste Steuersignal (30) so erzeugt wird, dass die Kopplung zwischen der Übertragungsspule (15) der Ladestation (14) und der Empfängerspule (27) erhöht wird.

11. Verfahren gemäß Anspruch 10, wobei die Iteration beendet wird, wenn eine Abweichung des bestimmten Kondensatorwertes von dem vorbestimmten Kondensatorwert innerhalb eines vorbestimmten Bereichs liegt.

12. Verfahren gemäß Anspruch 9 bis 11, wobei das erste Steuersignal (30) nur erzeugt wird, wenn die Entfernung zwischen der Übertragungsspule (15) der Ladestation (14) und der Empfängerspule (27) kleiner als eine vorbestimmte Entfernung ist.

13. Verfahren gemäß Anspruch 12, wobei eine Geolokalisierungseinheit (25) den Standort des Fahrzeugs (10) schätzt und ein zweites Steuersignal (92) erzeugt, das von dem Standort des Fahrzeugs (10) und dem Standort der Ladestation (14) abhängt, wobei das Fahrzeug (10) oder der Fahrer des Fahrzeugs (10) mittels des zweiten Steuersignals (92) zum Positionieren des Fahrzeugs (10) über die Ladestation (14) geführt wird, wenn die Entfernung zwischen der Übertragungsspule (15) der Ladestation (14) und der Empfängerspule (27) größer oder gleich der vorbestimmten Entfernung ist.

## Revendications

1. Système d'assistance à la conduite (11) destiné à positionner un véhicule (10) sur une station de charge (14), qui comporte une bobine de transmission (15) et qui est conçu pour générer un champ électromagnétique destiné à transmettre sans fil de l'énergie électrique au véhicule (10), ledit système comprenant :
- un circuit LC (17) comprenant une bobine réceptrice (27) qui est conçue pour convertir le champ électromagnétique en un signal électrique et un condensateur variable (29) qui est conçu pour adapter le circuit LC (17) à la bobine de transmission (15), et
- une unité de guidage (23) qui est conçue pour guider le véhicule (10) ou un conducteur du véhicule (10) afin de positionner le véhicule (10) sur la station de charge (14),
**caractérisé en ce que**
- le système d'assistance à la conduite (11) comprend en outre :
- une unité de détermination (19) qui est conçue pour déterminer la valeur du condensateur variable (29) après avoir adapté le circuit LC ;
- une unité de commande (21) qui est conçue pour recevoir la valeur de condensateur déterminée de l'unité de détermination (19) et pour générer un premier signal de commande (30), qui dépend d'une comparaison entre une valeur de condensateur prédéterminée et la valeur de condensateur déterminée, de sorte que le véhicule (10) ou le conducteur soit guidé par l'unité de guidage (23) de manière à manœuvrer le véhicule (10) dans une direction telle que le couplage entre la bobine de transmission (15) de la station de charge (14) et la bobine réceptrice (27) soit augmenté ; et
- l'unité de guidage (23) est conçue pour recevoir le premier signal de commande (30) de l'unité de commande (21) et pour guider le véhicule (10) ou un conducteur du véhicule (10) de manière à positionner le véhicule (10) sur la station de charge (14) au moyen du premier signal de commande (30).

2. Système d'assistance à la conduite (11) selon la revendication 1,
- le système d'assistance à la conduite (11) étant conçu pour positionner le véhicule (10) sur la station de charge (14) suivant des cycles d'itération consécutifs,
- à chaque cycle d'itération, l'unité de commande (21) recevant la valeur de condensateur déterminée de l'unité de détermination (19) et générant le premier signal de commande (30), et l'unité de guidage (23) recevant le premier signal de commande (30) de l'unité de commande (21) et guidant le véhicule (10) ou le conducteur de manière à manœuvrer le véhicule (10) au moyen du premier signal de commande (30), et
- à chaque cycle d'itération, l'unité de commande (21) générant le premier signal de commande (30) de sorte que le couplage entre la bobine de transmission (15) de la station de charge (14) et la bobine réceptrice (27) soit augmenté.

3. Système d'assistance à la conduite (11) selon la revendication 2, l'unité de commande (21) étant en outre conçue pour terminer l'itération lorsqu'un écart entre la valeur de condensateur déterminée et la valeur de condensateur prédéterminée est dans une gamme prédéterminée.

4. Système d'assistance à la conduite (11) selon l'une des revendications précédentes, l'unité de commande (21) étant en outre conçue pour générer le premier signal de commande (30) uniquement si la distance entre la bobine de transmission (15) de la station de charge (14) et la bobine réceptrice (27) est inférieure à une distance prédéterminée.

5. Système d'assistance à la conduite (11) selon la revendication 4, comprenant en outre une unité de géolocalisation (25) qui est conçue pour estimer l'emplacement du véhicule (10) et pour générer un deuxième signal de commande (92) qui dépend de l'emplacement du véhicule (10) et de l'emplacement de la station de charge (14), l'unité de guidage (23) étant en outre conçue pour guider le véhicule (10) ou le conducteur du véhicule (10) de manière à positionner le véhicule (10) sur la station de charge (14) au moyen du deuxième signal de commande (92) si la distance entre la bobine de transmission (15) de la station de charge (14) et la bobine réceptrice (27) est supérieure ou égale à la distance prédéterminée.

6. Système d'assistance à la conduite (11) selon l'une des revendications précédentes, l'unité de guidage (23) étant en outre conçue pour manœuvrer automatiquement le véhicule (10) de manière à positionner le véhicule (10) sur la station de charge (14) au moyen du premier signal de commande (30).

7. Système d'assistance à la conduite (11) selon l'une des revendications 1 à 5, l'unité de guidage (23) comprenant une unité d'indication (90) qui est conçue pour générer des indications de manière à indiquer au conducteur comment manœuvrer le véhicule (10) sur la station de charge (14).

8. Véhicule (10) comprenant un système d'assistance à la conduite (11) selon l'une des revendications précédentes.

9. Procédé de positionnement d'un véhicule (10) sur une station de charge (14) comprenant une bobine de transmission (15), le procédé comprenant les étapes suivantes :
- générer un champ électromagnétique par le biais de la station de charge (14) de manière à transmettre sans fil de l'énergie électrique au véhicule (10) ;
- convertir le champ électromagnétique en un signal électrique au moyen d'une bobine réceptrice (27) d'un circuit LC (17) situé dans le véhicule (10) et adapter le circuit LC (17) à la bobine de transmission (15) au moyen d'un condensateur variable (29) du circuit LC (17),
- déterminer la valeur du condensateur variable (29) après avoir adapté le circuit LC ;
- générer un premier signal de commande (30) qui dépend d'une comparaison entre une valeur de condensateur prédéterminée et la valeur de condensateur déterminée, le premier signal de commande (30) étant généré de telle sorte que le véhicule (10) ou le conducteur soit guidé de manière à manœuvrer le véhicule (10) dans une direction telle que le couplage entre la bobine de transmission (15) de la station de charge (14) et la bobine réceptrice (27) soit augmenté ; et
- guider le véhicule (10) ou un conducteur du véhicule (10) de manière à positionner le véhicule (10) sur la station de charge (14) au moyen du premier signal de commande (30).

10. Procédé selon la revendication 9,
- le véhicule (10) étant positionné sur la station de charge (14) suivant des cycles d'itération consécutifs,
- à chaque cycle d'itération, la valeur du condensateur variable (29) étant déterminée, le premier signal de commande (30) étant généré et le véhicule (10) ou le conducteur étant guidé de manière à manœuvrer le véhicule (10) au moyen du premier signal de commande (30), et
- à chaque cycle d'itération, le premier signal de commande (30) étant généré de telle sorte que le couplage entre la bobine de transmission (15) de la station de charge (14) et la bobine réceptrice (27) soit augmenté.

11. Procédé selon la revendication 10, l'itération étant terminée lorsqu'un écart entre la valeur de condensateur déterminée et la valeur de condensateur prédéterminée est situé dans une gamme prédéterminée.

12. Procédé selon l'une des revendications 9 à 11, le premier signal de commande (30) n'étant généré que si la distance entre la bobine de transmission (15) de la station de charge (14) et la bobine réceptrice (27) est inférieure à une distance prédéterminée.

13. Procédé selon la revendication 12, une unité de géolocalisation (25) estimant l'emplacement du véhicule (10) et générant un deuxième signal de commande (92) qui dépend de l'emplacement du véhicule (10) et de l'emplacement de la station de charge (14), le véhicule (10) ou le conducteur du véhicule (10) étant guidé de manière à positionner le véhicule (10) sur la station de charge (14) au moyen du deuxième signal de commande (92) si la distance entre la bobine de transmission (15) de la station de charge (14) et la bobine réceptrice (27) est supérieure ou égale à la distance prédéterminée.
